Europäisches Patentamt

European Patent Office

Office européen des brevets

(19)

(11) EP 0 510 559 B1

(12) **EUROPÄISCHE PATENTSCHRIFT**

(45) Veröffentlichungstag und Bekanntmachung des Hinweises auf die Patenterteilung:
**10.07.1996 Patentblatt 1996/28**

(51) Int Cl.[6]: **C08L 51/06**, C08L 23/12, C08L 43/04

(21) Anmeldenummer: **92106733.6**

(22) Anmeldetag: **21.04.1992**

(54) **Thermoplastische Elastomere und Verfahren zu deren Herstellung**

Thermoplastic elastomer and method for preparing the same

Elastomère thermoplastique et procédé pour sa préparation

(84) Benannte Vertragsstaaten:
**AT BE CH DE FR GB IT LI NL**

(30) Priorität: **22.04.1991 DE 4113063**

(43) Veröffentlichungstag der Anmeldung:
**28.10.1992 Patentblatt 1992/44**

(73) Patentinhaber: **Continental Aktiengesellschaft**
**D-30165 Hannover (DE)**

(72) Erfinder:
• **Röthemeyer, Fritz, Dr.**
**W-3004 Isernhagen 2 (DE)**
• **Lüpfert, Siegfried, Dr. rer. nat.**
**W-3004 Isernhagen 2 (DE)**

• **Fritz, Hans-Gerhard, Prof. Dr. Ing.**
**W-7336 Uhingen (DE)**
• **Anderlik, Rainer**
**W-7000 Stuttgart 1 (DE)**

(56) Entgegenhaltungen:
**EP-A- 0 325 573          EP-A- 0 412 518**
**WO-A-91/08257**

• **DATABASE WPIL Section Ch, Week 9021, Derwent Publications Ltd., London, GB; Class A17, AN 90-159104 & JP-A-2 099 539**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft **thermoplastische Elastomere** auf der Basis von thermoplastischen kristallinen Polyolefinen, wie etwa Polypropylen oder Polyethylen und Ethylen-Propylen-Copolymeren (EPM) oder Ethylen-Propylen-Dien Terpolymeren mit Diengehalten kleiner als 10 %. Letztere werden durch Einwirkung einer oberhalb einer **kritischen Vergleichsspannung** $\sigma_{krit}$ liegen Spannung dispergiert und durch eine **Hydrolyse- und Kondensationsreaktion** unter einer den erzielten Dispersionsgrad erhaltenden **Spannungseinwirkung** vernetzt.

In diesem Zustand liegen die Kautschukteilchen feinst verteilt im fließfähigen polyolefinen Matrixmaterial vor.

Die Erfindung betrifft ferner ein Verfahren zur Herstellung derartiger thermoplastischer Formmassen, welche im jeweiligen Produkt gummiartige Eigenschaften aufweisen.

Es ist bekannt, daß sich **silanmodifizierte EPM/EPDM-Kautschuktypen** durch Feuchtigkeit vernetzen lassen. (Hofmann, Kautschuk, Gummi, Kunststoffe 40 4/87, S. 317). Solche Typen finden vor allem in der Kabel- , aber auch in der Bauindustrie Anwendung. Durch diese Silanvernetzung entsteht ein vernetzter Gummiwerkstoff, der vor allem die Wasserdampfdurchlässigkeit von Kabeln erhöhen soll. (Literatur Cartasegna Rubber Chemistry and Technology 59, 1986, Firmenprospekt Esso Chemicals: Silane Grafted-Moisssture Curable.) Solche silanmodifizierten Kautschuktypen werden auch für die Herstellung von Gummiformteilen verwendet, bei denen der übliche Herstellungschritt des Vernetzens in einer heißen Form durch die Einwirkung von Feuchtigkeit ersetzt wird. In der Europäischen Patentschrift **EP 0325573** wird beispielsweise ein Werkstoff beschrieben, bei dem ein Blend, bestehend aus einem elastoplastischen Material und einem Polyolefin mit hydrolysierbaren Silangruppen gemischt wurde und unter der Einwirkung von Feuchte zu einem Gummiwerkstoff mit guten elastischen Eigenschaften vernetzt wird. Im **EP 0256246** wird ebenfalls ein gummiartiger Werkstoff beschrieben, bei dem durch Kontakt mit Wasser bzw. Feuchtigkeit der Vernetzungsschritt erfolgt. Den hier erwähnten silanmodifizierten Gummiwerkstoffen ist gemeinsam, daß sich durch die Einwirkung von Feuchtigkeit eine **irreversible Netzwerkstruktur** bildet, die ein erneutes Aufschmelzen und Verarbeiten wie bei Thermoplasten üblich, nicht zuläßt. Für den erfindungsgemäßen Werkstoff ist es wichtig zu bemerken, daß die Silan-Pfropfung und Feuchtigkeitsvernetzung durch die hohe Bindungsenergie der Si-O-Si Vernetzungsstellen und durch die Bildung eines polyfunktionalen Netzwerkes zu sehr stabilen Netzwerkstrukturen führt.

Thermoplastisch verarbeitbare gummiartige Werkstoffe auf der 3asis von Kunststoffen und vernetzten Kautschukpartikeln werden in der Deutschen Auslegeschrift **DE 2202706** beschrieben, wobei in Gegenwart von **Peroxiden** die Kautschukphase vernetzt wird. In der Offenlegungsschrift **DE 2632654** wird ein weiterer Werkstoff beschrieben, bei dem die Kautschukkomponente durch ein Schwefelvernetzungssystem vernetzt wird und so verbesserte Eigenschaften aufweist. Solchen schwefelvernetzten Werkstoffen kann der Mangel eines **intensiven Geruches** anhaften und schränkt somit die Anwendung für bestimmte Gebrauchsbereiche ein. In der **DE 2848488 C2** wird die Lehre zur Herstellung eines thermoplastischen Elastomerwerkstoffes mit verbesserten Festigkeitseigenschaften offengelegt, bei dem die Vernetzung einer EPDM-Kautschukkomponente durch ein **phenolisches Härtersystem** mit einem halogenhaltigen Härtungsbeschleuniger erfolgt. Mit dieser Art der Vernetzung können jedoch Ethylen-Propylen-Copolymere nicht vernetzt werden. Zur vorzugsweisen Aushärtung der EPDM-Komponente werden hier 7 - 14 Gewichtsanteile phenolischer Härter sowie ein weiterer erheblicher Anteil halogenierten Härtungsbeschleunigers benötigt. Das Verfahren zur Herstellung solcher Stoffe wird des weiteren im **EP 0107635** beschrieben.

JP 2099537 beschreibt die Herstellung eines Elastomeren, das einen silangepfropften Olefincopolymer-Kautschuk und ein Monoolefinharz im Verhältnis 40:60 bis 90:10 enthält. Im Mischaggregat werden eine nur geringe Wassermenge und der Katalysator zugegeben, so daß dort nur eine geringe Anvernetzung erfolgt. Die Nachvernetzung in Gegenwart von Wasserüberschüssen erfolgt gemäß Beispiel statisch, so daß insgesamt ein nicht wieder aufschmelzbarer Werkstoff mit fixierter cokontinuierlicher Phasenstruktur entstehen muß.

Der vorliegenden Erfindung lag die Aufgabe zugrunde, einen thermoplastisch verarbeitbaren und damit recyclierbaren elastomeren Werkstoff auf der Basis von kristallinen thermoplastischen Polyolefinen und EPM- oder EPDM-Kautschuken zu schaffen, der mit wenigen und physiologisch neutralen Vernetzungschemikalien zu farblich und geruchlich neutralen, kostengünstigen und hochwertigen Werkstoffen führt. Darüber hinaus sollten die physikalischen Eigenschaften weiter verbessert werden.

Diese Aufgabe wurde gemäß der Erfindung durch eine Formmasse auf der Basis kristalliner thermoplastischer Polyolefine und Ethylen-Propylen-Copolymerer oder Ethylen-Propylen-Dien-Terpolymerer, umfassend die folgenden Bestandteile:

(a) 30 - 70 Gewichtsanteile thermoplastischen Polyolefins

(b) 70 - 30 Gewichtsanteile eines silangepfropften Ethylen-Propylen-Copolymeren EPM oder Ethylen-Propylen-Dien-Terpolymeren EPDM

(c) 0 - 200 Gewichtsanteile Verdünnungsöl pro 100 Gewichtsanteile der Komponente (b)

(d) 0 - 100 Gewichtsanteile festigkeitserhöhender schwarzer oder heller Füllstoffe sowie

(e) gegebenenfalls Pigmente, Stabilisatoren, Flammhemmstoffe, Antistatika, Weichmacher und Verarbeitungshilfsmittel in üblichen Mengen,
erhältlich dadurch, daß die Bestandteile in einem dispersiven Mischvorgang homogen vermischt werden, wobei der Bestandteil (b) unter Einwirkung einer oberhalb der zum Zerteilen der Kautschukphase notwendigen Vergleichsspannung $\alpha_{krit}$ liegenden Spannung dispergiert wird,

sowie einen thermoplastischen Elastomerwerkstoff gelöst,
der dadurch erhältlich ist, daß der Bestandteil (b) der obigen Formmasse durch eine Hydrolyse- und Kondensationsreaktion unter einer den erzielten Dispersionsgrad erhaltenden und die Vernetzung beschleunigenden Spannungseinwirkung zu einer dreidimensionalen Netzwerkstruktur vernetzt wird.

Es war in hohem Maße überraschend, daß sich durch die Silanvernetzungsre'aktion der Kautschukphase in der beschriebenen Art Materialien mit herausragenden Eigenschaften herstellen ließen, die elastomeren Charakter aufweisen, sich aber thermoplastisch und damit kostengünstig verarbeiten lassen. Die zur Erzielung der elastischen Eigenschaften notwendige Vulkanisationsstufe entfällt, das erfindungsgemäße Material verfügt über eine morphologische Struktur, bei der fein verteilte und vernetzte Kautschukpartikel in der fließfähigen Kunststoffmatrix vorliegen, die eine Wiederverwertung von Alt- und Abfallmaterial zuläßt.

Es war insbesondere überraschend, daß sich bei der Verwendung des **Organosilanvernetzungsverfahrens** mit sehr geringem Einsatz an physiologisch, **farblich und geruchlich neutralen Chemikalien** herausragende Festigkeitseigenschaften bei guten elastischen Eigenschaften herstellen ließen.

In diesem Zusammenhang ist es wichtig zu bemerken, daß die Silanpfropfung / Feuchtigkeitsvernetzung aufgrund der hohen Bindungsenergie der Si-O-Si Vernetzungsstellen und durch die Bildung eines polyfunktionalen Netzwerks zu sehr stabilen Netzwerkstrukturen führt. Je nach eingestellter Härte (50 Shore A - 40 Shore D) werden folgende physikalische **Werkstoffeigenschaften** erzielt:

| | |
|---|---|
| - Festigkeit : | 4 - 19 N/mm$^2$ |
| - Dehnung : | 250 - 500 % |
| - Modul 100 % : | 2,5 - 11 N/mm$^2$ |
| - Weiterreißfestigkeit : | 4 - 33 N/mm |
| - Druckverformungsrest (22 h, 70 °C): | 25 - 60 % |
| - Abrieb : | 300 - 120 mm$^2$ |
| - Viskosität : | 250 - 700 Pa s (180°C, 330 s$^{-1}$) |

In der **DE 2848448** werden gute Festigkeits- und Elastizitätseigenschaften eines Polyolefinharz /Kautschukblends beschrieben, bei dem die Ethylen-Propylen-Dien-Terpolymerkomponente durch ein **phenolisches Härterharz** mit einem halogenspendenden Härtungsbeschleuniger vernetzt wird. Die kostengünstigeren Ethylen-Propylen-Copolymere können auf diese Art nicht vernetzt werden. Zur Vernetzung des EPDM-Kautschuks nach diesem Verfahren werden vorzugsweise 7 - 14 Gewichtsprozent phenolischer Härter sowie weitere 0,01 - 10 Gewichtsprozent Härtungsbeschleuniger pro 100 Gewichtsanteile des Kautschuks benötigt.

Bei der erfindungsgemäßen Formmasse, bei der die Vernetzungstellen durch **Aufpfropfen von Organosilanen** auf die Kautschukketten in Gegenwart von Radikalspendern, wie etwa organischen Peroxiden entstehen, sind deutlich **geringere Konzentrationen an Vernetzungschemikalien** notwendig und können damit die Kosten senken. Darüber hinaus sind diese Chemikalien **farblich neutral,** so daß **transluzente Bauteile** hergestellt werden können. Im Vergleich zum phenolischen Härtersystem ist mit dem Organosilanvernetzungsverfahren ein deutlich **geringerer Geruch** der Formmassen erzielbar, eine Eigenschaft, die für Anwendungen im Automobil, aber auch im Haushalt wachsende Bedeutung gewinnt. Für die Vernetzungsreaktion der Kautschukkomponente werden **Chemikalien** in folgenden Bestandteilen benötigt.

(1) 1 - 4 Gewichtsanteile **Organosilan** pro 100 Gewichtsanteile Kautschuk. Bevorzugte Formmassen enthalten 1,5 - 3,0 Gewichtsanteile Organosilan, z. B. Vinyltrimethoxysilan, pro 100 Gewichtsanteile Kautschuk.

(2) 0,03 - 0,3 Gewichtsanteile **Radikalspender,** wie etwa organische Peroxide pro 100 Gewichtsanteile Kautschuk, z. B. 2,5-Dimethylhexan-2,5-di-t-butylperoxid (DHBP), Dicumylperoxid (DCUP), t-Butylcumylperoxid (BCUP) oder Bis-(t-butylperoxy-isopropyl)Benzol (DIPP)
Bei der Dosierung der Radikalspender, wie etwa Peroxiden ist insbesondere darauf zu achten, daß keine nennenswerte peroxidische Vorvernetzung der Kautschukkomponente allein durch zu hohe Konzentrationen an solchen Stoffen auftritt. Bei zu hohen Peroxiddosierungen, die für die unterschiedlichen Kautschuksorten verschieden sind, kann eine eventuell eintretende Vorvernetzung die Mischung des gepfropften Kautschuks mit den anderen Komponenten erschweren und zu nicht optimalen Ergebnissen führen.

(3) 0,005 - 0,05 Gewichtsanteile eines Alkoxy-Silan-Hydrolyse **Katalysators**, wie etwa Dibutylzinndilaurat (DBTL) oder Dioctylzinndilaurat (DOTDL)

(4) ferner wird **Wasser** oder andere zur Hydrolyse- und Kondensationsreaktion der Silanolgruppen geeignete Substanzen, wie etwa Alkohole in 0,5 - 4 Gewichtsanteilen pro 100 Gewichtsanteile Kautschuk zugesetzt. Nicht für die Hydrolyse benötigte bzw. bei der anschließenden Kondensationsreaktion von Silanolgruppen freiwerdende Wassermoleküle und andere flüchtige Substanzen werden durch Entgasung im Reaktionsextruder entzogen. Die Zudosierung von Wasser kann auch über geeignete mineralische Stoffe wie wassergefüllte **Zeolithe** erfolgen, in der bevorzugten Einstellung erfolgt die Zudosierung von Wasser und/oder anderen geeigneten Substanzen direkt über eine Pumpe in das Aufbereitungsaggregat.

**Beschreibung des Verfahrens zur Herstellung der erfindungsgemäßen Formmassen**

Die in den **Bildern 1 und 2** dargestellten **Verfahrenschemata** verdeutlichen den Herstellungsgang der erfindungsgemäßen Formmassen auf der Basis von thermoplastischen kristallinen Polyolefinen und EPM-Copolymeren oder EPDM-Terpolymeren. Letztere werden durch Einwirkung einer oberhalb einer **kritischen Vergleichsspannung** $\sigma_{krit}$ liegen Spannung $\sigma$ **dispergiert** und durch eine **Hydrolyse- und Kondensationsreaktion** unter einer den erzielten Dispersionsgrad erhaltenden **Spannungseinwirkung vernetzt**.

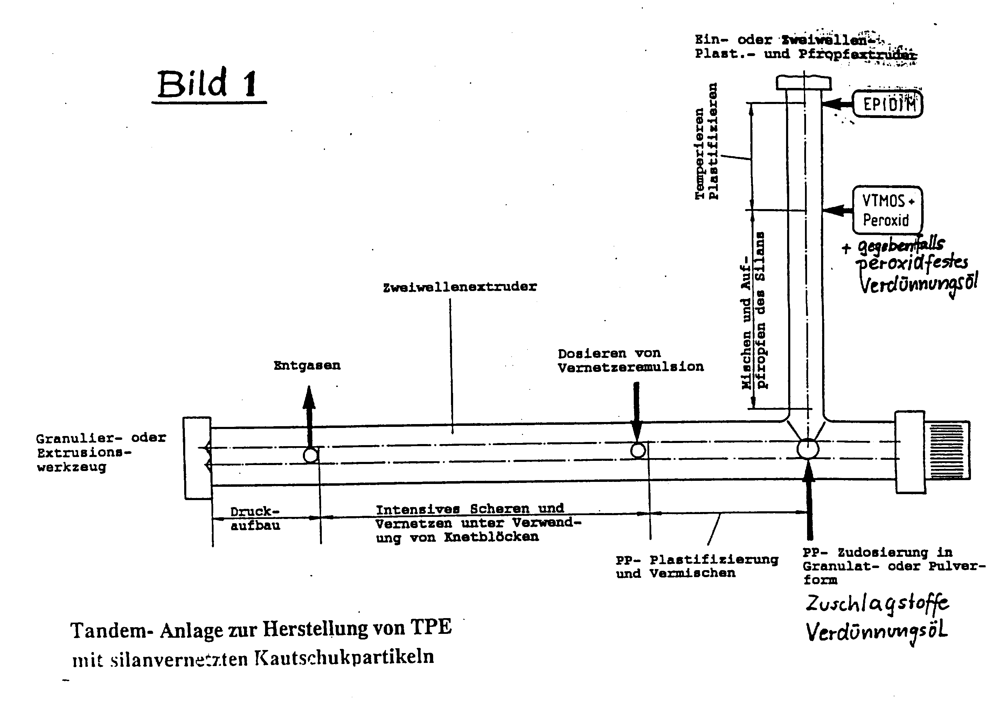

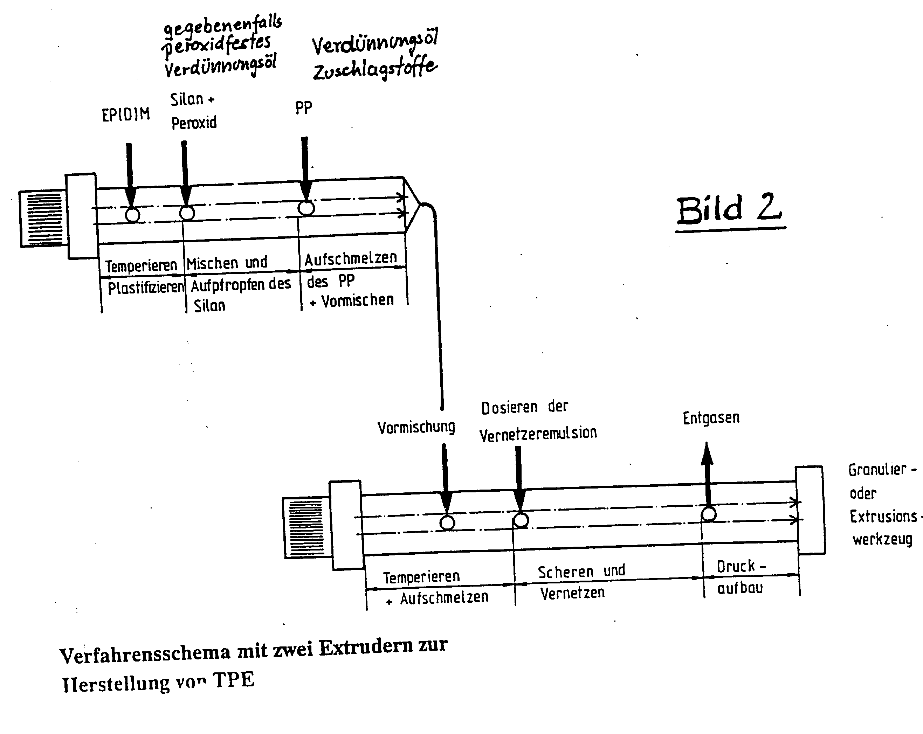

Die **Bilder 1 und 2** zeigen beispielhaft 2 Verfahrensabläufe. Es wird ein **Zweistufenprozeß** und ein **Einstufenprozeß** mit einer Kaskaden- oder Tandem-Extruderkombination dargestellt.

Im **ersten Verfahrensschritt** wird EPM oder EPDM-Kautschuk durch Zugabe von Organosilan und Radikalspendern, wie etwa Peroxiden, die durch Einwirkung von Wärme freie Radikale zur Verfügung stellen, **silangepfropft**. Entgegen sonst üblichen Verfahren der Silanpropfung von Polyolefinen (vgl. Literatur Exxon, Cartasegna, Ultsch) wird hier vorerst kein Vernetzungskatalysator zugegeben, der geeignet ist, die Hydrolyse und Kondensationsreaktion der Organosilane in Gegenwart von Feuchte zu bewirken. Für die Erzielung guter Mischungen von EPM- oder EPDM-Kautschuken mit dem thermoplastischen kristallinen Polyolefinharz und der damit verbundenen hohen Produktqualität ist es notwendig, hier in diesem Pfropfungsschritt die **Gelbildung bzw. Vorvernetzung** auf diese Weise zu **vermeiden**. Die Verminderung von Rest- oder Oberflächenfeuchte im Kautschukmaterial zur Verringerung von Vorvernetzung ist möglich aber teurer als die oben beschriebene Vorgehensweise.

Gleichzeitig mit der Einbringung des Organosilan / Radikalspender-Gemisches kann auch **Verdünnungsöl** über eine Dosierpumpe in den Extruder zudosiert werden. Eine andere Art der Einbringung von Verdünnungsöl stellt die Verwendung von **ölgefüllten Kautschuken** dar. Es können auch beide Verfahren zur Einstellung der Härte gleichzeitig angewendet werden. Zur Erzielung der gewünschten erfindungsgemäßen Formmassen ist jedoch darauf zu achten, daß Ölsorten verwendet werden, die sich weitgehend unbeteiligt an der Pfropfungsreaktion von Organosilanen auf die EPM/EPDM-Kautschukketten verhalten. Hier haben sich peroxidfeste paraffinische Weißöle bewährt.

Zur Erzielung hoher Produktqualitäten muß insbesondere bei EPDM-Kautschuken auch durch die geeignete Wahl des Peroxidanteils darauf geachtet werden, daß keine nennenswerte peroxidische Vorvernetzung auftritt. Die günstige **Menge an Peroxid**, die ausreichend ist, um mit Hilfe der Silanpfropfung hohe Vernetzungsausbeuten zu erreichen, ohne bereits merkliche, den Dispersionsvorgang behindernde Vorvernetzung zu bewirken, hängt von der unterschiedlichen Zusammensetzung der EPM/EPDM-Kautschuksorten ab, die sich in Dienart, Diengehalt, Molekulargewicht, Molekulargewichtsverteilung etc. unterscheiden und kann in Vorversuchen durch Bestimmung des Gelgehaltes z. B. bei der Extraktion in siedendem Xylol ermittelt werden. Der Gelgehalt soll hier kleiner als 10 % sein, vorzugsweise soll er 0 % betragen. Vorzugsweise haben sich EP-Elastomere bewährt, bei denen der Diengehalt kleiner als 3 % beträgt.

Nach erfolgtem Pfropfungsschritt von Organosilanen auf die EPM/EPDM-Moleküle erfolgt die Zudosierung des kristallinen thermoplastischen Polyolefins, vorzugsweise wird hier **Polypropylen** verwendet und gegebenenfalls weiterer Füllstoff sowie gegebenenfalls weiteres Verdünnungsöl, an das jedoch nicht der Anspruch der Peroxidfestigkeit gestellt werden muß.

Im Verfahrensschema schließt sich eine Zone im Aufbereitungsaggregat an, in der das zudosierte kristalline thermoplastische Polyolefinharz aufgeschmolzen und mit den silangepfropften EPM- oder EPDM-Kautschuk sowie den zudosierten Zuschlagstoffen homogen vermischt wird. Hierbei handelt es sich um einen **dispersiven Mischvorgang**, bei dem sichergestellt sein muß, daß die zum Zerteilen der Kautschukphase notwendige **Vergleichsspannung** $\sigma_{krit}$ überschritten wird. Wie bei der Dispersion von Füllstoffen in einer Kautschukmatrix hat sich herausgestellt, daß Scher-, Knet- und Mischelemente eingesetzt werden müssen, die vorzugsweise **Zugspannungen im Strömungsfeld** erzeugen und auf die Kautschukpartikel übertragen.

Derartige Zugspannungen werden bevorzugt in den Keilspalten erzeugt, welche von zwei gleichsinnig rotierenden, speziellen **Stufenschneckenelementen** gebildet werden.

$$\sigma > \sigma_{krit} \ (D{\cdot}n/ \sqrt{D{\cdot}H} \ )$$

Beim Verfahrensbeispiel mit zwei Extrudern muß vermieden werden, daß die Vormischung Bedingungen ausgesetzt ist, die zu einer Vorvernetzung der Kautschukpartikel führen können. Ist in der Vormischung kein Katalysator zur

EP 0 510 559 B1

Hydrolyse und Kondensation der Silanolgruppen vorhanden, so tritt keine wesentliche Vorvernetzung bei Umgebungsbedingungen und Lagerzeiten kleiner als etwa eine Stunde auf.

Im nächsten Verfahrensschritt wird erneut ein Reaktionsgemisch in den Extruder dosiert, das die **Vernetzung** der Kautschuk komponente bewirkt. Dieses Reaktionsgemisch besteht aus den anfangs erwähnten geeigneten Substanzen, die durch Vorhandensein der OH-Funktionalität in der Lage sind, über eine **Hydrolyse und Kondenstationsreaktion** die Vernetzung der Kautschukkomponente zu bewirken und einem Katalysator zur Beschleunigung der Hydrolyse- und Kondensationsreaktion sowie aus einem handelsüblichen Tensid. Dem Tensid kommt die Aufgabe zu, die unpolare Katalysatorflüssigkeit in den polaren Stoffen, die die Hydrolysereaktion an den aufgepropften Organosilan-molekülen bewirken, stabil zu emulgieren, um eine gleichmäßige Konzentration des mengenmäßig geringeren Katalysators im Vernetzungsgemisch zu gewährleisten. In den bevorzugten Einstellungen werden Gemische aus Wasser, höherwertigen Alkoholen, wie etwa Ethylenglykol, dem Katalysator Dibutylzinndilaurat und handelsüblichen Tensiden (Emulgin der Firma Henkel) verwendet. Die Zugabe von höherwertigen Alkoholen übernimmt neben der chemischen Funktion eine Erniedrigung des Dampfdruckes des Alkohol/Wasser-Gemisches gegenüber dem reinen Wasser beim Eindosieren in das Aufbereitungsaggregat, in dem die Temperaturen bei den bevorzugten Einstellungen im Bereich von 180 °C - 240°C liegen. Außerdem kann hier in der Emulsion zusätzlich noch Verdünnungsöl enthalten sein. Die Emulgatormenge sollte dabei dem Verhältnis von polarer zu unpolarer Phase angepaßt sein. Erfahrungswerte über die Massenantelle an Emulgator können beim Hersteller solcher Stoffe erfragt werden. Bei den bevorzugten Formmassen wurde kein weiteres Verdünnungsöl der Vernetzungsemulsion zugegeben, der Anteil an Emulgator beträgt hier etwa 5 - 15 % des unpolaren Katalysatoranteils, der die Ölphase in dieser Emulsion darstellt. Die Zugabe von Emulgator verbessert die antistatischen Eigenschaften der Formmasse. Bei der Zudosierung der Vernetzungsemulsion ist darauf zu achten, daß ausreichend Vernetzungskatalysator in das Aufbereitungsaggregat zudosiert wird, um **hohe Reaktionsgeschwindigkeiten und Vernetzungsausbeuten** zu enthalten. Es sollten 0,005 - 0,05 Gewichtsanteile eines derartigen, wie oben beschriebenen Katalysators pro 100 Gewichtsanteile des Kautschuks zudosiert werden. Bevorzugt werden 0,01 - 0,05 Gewichtsanteile des Katalysators Dibutylzinndilaurat pro 100 Gewichtsanteile des Kautschuks. Die Zudosierung der für die Hydrolyse und Vernetzungsreaktion notwendigen Stoffe wie z. B. Wasser oder Alkohol muß in ausreichender Menge erfolgen, so daß die reaktiven Stellen des silangepfropften Kautschuks derart stark vernetzt werden, daß unter Einwirkung der Umgebungsfeuchte **keine Nachvernetzung** mehr auftritt, die zu einer verschlechterten thermoplastischen Verarbeitbarkeit führen würde. Die gewünschte hohe Vernetzung des silangepfropften Kautschuks wird durch die Zudosierung von 0,5 - 4 Gewichtsanteilen der zur Hydrolysereaktion der Organosilangruppen geeigneten Substanzen wie z. B. Wasser oder Alkohole pro 100 Gewichtsanteile Kautschuk erreicht. Nicht für die Hydrolyse benötigte und bei der Hydrolyse- und Kondensationsreaktion freiwerdende niedermolekulare flüchtige Stoffe werden über eine Entgasungsvorrichtung der Formmasse entzogen.

Für die Herstellung der erfindungsgemäßen Formmassen ist es wesentlich, daß die Vernetzungsreaktion unter Wirkung einer ausreichend **hohen Vergleichsspannung** stattfindet. Diese ist für die Erzielung zweier Effekte notwendig:

- Erhaltung des in den Vorstufen erzielten **Dispersionsgrades** während der Vernetzung bei gleichzeitiger Vermeidung der Bildung zusammenhängender Netzwerke, die den thermoplastischen Charakter des Werkstoffs zerstören würde.

- Erzielung eines **"mechanisch-thermisch-chemischen" Vernetzungseffektes** im Hinblick auf sehr kurze Vernetzungszeiten. Solche Effekte sind vom Spritzgießen von Kautschukmischungen bekannt und stellen einen wesentlichen Vorteil dieses Verfahrens dar. Sie basieren auf folgenden Überlegungen: Die von der angelegten Spannung bewirkten Deformationen führen zu einer Zerstörung polymolekularer Überstrukturen durch Aufbrechen der molekularen Wechselwirkungen der Inter- und Intrakettenkräfte. Wenn genügend Energie auf ein Segment der Polymerkette konzentriert ist, d. h. eine uneinheitliche Spannungsverteilung mit lokalen Spannungsspitzen entsteht, kann es, bei Überschreiten eines kritischen Wertes, zu einem mechanisch bedingten Bruch von Hauptvalenzbindungen kommen. Hierbei werden vorzugsweise die im thermodynamischen Sinne schwächsten Kettenteile aufgebrochen (homolytische Kettenspaltung). Andererseits bewirken aber auch Spannungen unterhalb dieses kritischen Wertes eine Änderung der Valenzwinkel und eine Erhöhung der interatomaren Abstände durch Verstreckung und damit eine Zunahme der potentiellen Energie der Kette. Dieser höhere Energiezustand erhöht auch die Reaktivität der Ketten; d. h. Spannungen können zu einer mechanischen Aktivierung von thermischen Reaktionsvorgängen führen.

Die oben beschriebene Erfindungsmeldung wird durch zwei **Beispiele** (hohe und niedrige Härte) erläutert.

**Beispiel 1:**

55,2 Gew. Tl. eines Ethylen-Propylen-Terpolymeren mit einem Ethylengehalt von 50 % (z. B. Vistalon 2555 der Fa. Exxon) werden mit 3,2 Gew. Tl. eines Reaktionsgemisches, bestehend aus Vinyltrimethoxysilan (VTMOS) und 2,5-Dimethyl-2,5-di (tert. butylperoxy)-hexan (DHBP) im Verhältnis 15:1 silangepfropft, mit 44,8 Gew. Tl. Polypropylen (Schmelzindex 4 g/10 min MFI 190/5) und 27,6 Gew. Tl. Paraffinöl nach dem in der Bildern 1 und 2 dargestellten Verfahrensschema zu einem Elastomer-Blend verarbeitet.

| | |
|---|---|
| - Äthylenglykol | 50 Gew. Tl. |
| - Wasser | 50 Gew. Tl. |
| - Dibutylzinndilaurat (DBTL) | 0,1 Gew. Tl. |
| - organischem Tensid (handelsüblich) | 0,015 Gew. Tl. |

Das so hergestellte thermoplastische Elastomer läßt sich im Spritzguß und Extrusionsprozeß verarbeiten und führt zu folgenden Materialeigenschaften:

| | | |
|---|---|---|
| - Viskosität bei 180 °C und Schergeschwindigkeit = 300 1/s | Pa x s | 400 |
| - Dichte | $g/cm^3$ | 0,88 |
| - Shore-Härte A | | 90 |
| - Zugfestigkeit | $N/mm^2$ | 12 |
| - Zerreißdehnung | % | 400 |
| - Modul 100 % | $N/mm^2$ | 6 |
| - Weiterreißfestigkeit | $N/mm^2$ | 20 |
| - Druckverformungsrest 22 h 70 °C | % | 60 |

**Beispiel 2:**

70 Gew. Tl. Ethylen-Propylen-Terpolymerisat wie in Beispiel 1 werden mit 4 Gew. Tl. Reaktionsgemisch silangepfropft, weil 30 Gew. Tl. Polypropylen und 84 Gew. Tl. Paraffinöl, wie in Beispiel 1 beschrieben, verarbeitet. Die Vernetzung erfolgt analog Beispiel 1.

Man erhält folgende Materialeigenschaften:

| | | |
|---|---|---|
| - Viskosität bei 180 °C und Schergeschwindigkeit = 300 1/s | Pa x s | 330 |
| - Dichte | $g/cm^3$ | 0,88 |
| - Shore-Härte A | | 57 |
| - Zugfestigkeit | $N/mm^2$ | 4,5 |
| - Zerreißdehnung | % | 250 |
| - Modul 100 % | $N/mm^2$ | 2,5 |
| - Weiterreißfestigkeit | $N/mm^2$ | 5 |
| - Druckverformungsrest 22 h 70 °C | % | 35 |

**Patentansprüche**

1. Thermoplastische elastomere Formmasse auf der Basis kristalliner thermoplastischer Polyolefine und Ethylen-Propylen-Copolymerer oder Ethylen-Propylen-Dien-Terpolymerer, umfassend die folgenden Bestandteile:

(a) 30 - 70 Gewichtsanteile thermoplastischen Polyolefins
(b) 70 - 30 Gewichtsanteile eines silangepfropften Ethylen-Propylen-Copolymeren EPM oder Ethylen-Propylen-Dien-Terpolymeren EPDM
(c) 0 - 200 Gewichtsanteile Verdünnungsöl pro 100 Gewichtsanteile der Komponente (b)
(d) 0 - 100 Gewichtsanteile festigkeitserhöhender schwarzer oder heller Füllstoffe sowie
(e) gegebenenfalls Pigmente, Stabilisatoren, Flammhemmstoffe, Antistatika, Weichmacher und Verarbeitungshilfsmittel in üblichen Mengen,

erhältlich dadurch, daß die Bestandteile in einem dispersiven Mischvorgang homogen vermischt werden, wobei der Bestandteil (b) unter Einwirkung einer oberhalb der zum Zerteilen der Kautschukphase notwendigen Vergleichsspannung $\sigma_{krit}$ liegenden Spannung dispergiert wird.

2. Thermoplastisch elastomere Formmasse nach Anspruch 1, dadurch gekennzeichnet,

daß der Diengehalt des Bestandteils (b) unter 3 % liegt.

3. Thermoplastisch elastomere Formmasse nach Anspruch 1 oder 2, dadurch gekennzeichnet, daß

der Bestandteil (a) Polypropylen ist oder umfaßt.

4. Thermoplastischer Elastomerwerkstoff auf der Basis kristalliner thermoplastischer Polyolefine und Ethylen-Propylen-Copolymerer oder Ethylen-Propylen-Dien-Terpolymerer, umfassend die folgenden Bestandteile:

(a) 30 - 70 Gewichtsanteile thermoplastischen Polyolefins
(b) 70 - 30 Gewichtsanteile eines silangepfropften Ethylen-Propylen-Copolymeren EPM oder Ethylen-Propylen-Dien-Terpolymeren EPDM
(c) 0 - 200 Gewichtsanteile Verdünnungsöl pro 100 Gewichtsanteile der Komponente (b)
(d) 0 - 100 Gewichtsanteile festigkeitserhöhender schwarzer oder heller Füllstoffe sowie
(e) gegebenenfalls Pigmente, Stabilisatoren, Flammhemmstoffe, Antistatika, Weichmacher und Verarbeitungshilfsmittel in üblichen Mengen,

erhältlich dadurch, daß die Bestandteile in einem dispersiven Mischvorgang homogen vermischt werden, wobei der Bestandteil (b) unter Einwirkung einer oberhalb der zum Zerteilen der Kautschukphase notwendigen Vergleichsspannung $\sigma_{krit}$ liegenden Spannung dispergiert und durch eine Hydrolyse- und Kondensationsreaktion unter einer den erzielten Dispersionsgrad erhaltenden und die Vernetzung beschleunigenden Spannungseinwirkung zu einer dreidimensionalen Netzwerkstruktur vernetzt wird.

5. Thermoplastischer Elastomerwerkstoff nach Anspruch 4, dadurch gekennzeichnet,

daß der Diengehalt des Bestandteils (b) unter 3 % liegt.

6. Thermoplastischer Elastomerwerkstoff nach Anspruch 4 oder 5, dadurch gekennzeichnet, daß

der Bestandteil (a) Polypropylen ist oder umfaßt.

7. Verfahren zum Herstellen eines thermoplastischen Elastomerwerkstoffes,

dadurch gekennzeichnet, daß

(i) (a) 30 - 70 Gewichtsanteile thermoplastischen Polyolefins zu (b) 70 - 30 Gewichtsanteilen eines silangepfropften Ethylen-Propylen-Copolymeren EPM oder Ethylen-Propylen-Dien-Terpolymeren EPDM sowie (c) 0 - 200 Gewichtsanteilen Verdünnungsöl pro 100 Gewichtsanteile der Komponente (b) und (d) 0 - 100 Gewichtsanteilen festigkeitserhöhender schwarzer oder heller Füllstoffe sowie gegebenenfalls Pigmenten, Stabilisatoren, Flammhemmstoffen, Antistatika, Weichmachern und Verarbeitungshilfsmitteln in üblichen Mengen
zudosiert und aufgeschmolzen wird,
(ii) die Bestandteile in einem dispersiven Mischvorgang homogen vermischt werden, wobei Bestandteil (b) unter Einwirkung einer oberhalb der zum Zerteilen der Kautschukphase notwendige Vergleichsspannung $\sigma_{krit}$ liegenden Spannung dispergiert wird und
(iii) mit Hilfe von Vernetzungsemulsion oder einer wasserabspaltenden Substanz und Vernetzungskatalysator die Vernetzung der Kautschukkomponente bewirkt wird.

8. Verfahren nach Anspruch 7,

dadurch gekennzeichnet,
daß während des dispersiven Mischvorgangs Zugspannung im Strömungsfeld erzeugt wird.

**9.** Verfahren nach Anspruch 8,

dadurch gekennzeichnet,
daß die Zugspannung durch zwei gleichsinnig rotierende Stufenschneckenelemente erzeugt wird.

**10.** Verfahren nach einem der Ansprüche 7 bis 9,

dadurch gekennzeichnet,
daß die Vernetzung der Kautschukkomponente mit Hilfe einer Emulsion, enthaltend

(a) 0,005 - 0,05 Gewichtsanteile Alkoxy-Silanhydrolyse-Katalysator auf 100 Gewichtsanteile Kautschuk
(b) 0,5 - 4 Gewichtsanteile an zur Hydrolyse der Organosilangruppen geeigneten Substanzen auf 100 Gewichtsanteile Kautschuk
(c) Emulgator in üblicher Konzentration, bewirkt wird.

## Claims

1. Thermoplastic elastomeric moulding compound based on crystalline thermoplastic polyolefins and ethylene-propylene copolymers or ethylene-propylene-diene terpolymers, including the following ingredients:

   (a) 30 - 70 parts by weight thermoplastic polyolefin,
   (b) 70 - 30 parts by weight of a silane-plugged ethylene-propylene copolymer EPM or ethylene-propylene-diene terpolymer EPDM,
   (c) 0 - 200 parts by weight diluting oil per 100 parts by weight of component (b),
   (d) 0 - 100 parts by weight stength-increasing, black or pale filler substances, as well as
   (e) if necessary, pigments, stabilisers, flame retardants, antistatics, plasticisers and auxiliary products in conventional quantities,
   obtainable in that the ingredients are homogeneously mixed in a dispersive mixing process, ingredient (b) being dispersed by the effect of a stress, which lies above the comparative stress $\sigma_{crit}$ required for separating the rubber phase.

2. Thermoplastic elastomeric moulding compound according to claim 1, characterised in that the diene content of ingredient (b) is less than 3 %.

3. Thermoplastic elastomeric moulding compound according to claim 1 or 2, characterised in that ingredient (a) is or includes polypropylene.

4. Thermoplastic elastomeric material based on crystalline thermoplastic polyolefins and ethylene-propylene copolymers or ethylene-propylene-diene terpolymers, including the following ingredients:

   (a) 30 - 70 parts by weight thermoplastic polyolefin,
   (b) 70 - 30 parts by weight of a silane-plugged ethylene-propylene copolymer EPM or ethylene-propylene-diene terpolymer EPDM,
   (c) 0 - 200 parts by weight diluting oil per 100 parts by weight of component (b),
   (d) 0 - 100 parts by weight strength-increasing, black or pale filler substances, as well as
   (e) if necessary, pigments, stabilisers, flame retardants, antistatics, plasticisers and auxiliary products in conventional quantities,
   obtainable in that the ingredients are homogeneously mixed in a dispersive mixing process, ingredient (b) being dispersed by the effect of a stress, which lies above the comparative stress $\sigma_{crit}$ required for separating the rubber phase, and being cross-linked by a hydrolysis and condensation reaction to form a three-dimensional lattice structure due to the effect of a stress which achieves the desired degree of dispersion and accelerates the cross-linking.

5. Thermoplastic elastomeric material according to claim 4, characterised in that the diene content of ingredient (b) is less than 3 %.

6. Thermoplastic elastomeric material according to claim 4 or 5, characterised in that ingredient (a) is or includes polypropylene.

7. Method of producing a thermoplastic elastomeric material, characterised in that

(i) (a) 30 - 70 parts by weight thermoplastic polyolefin are additionally dosed to (b) 70 - 30 parts by weight of a silane-plugged ethylene-propylene copolymer EPM or ethylene-propylene-diene terpolymer EPDM, as well as (c) 0 - 200 parts by weight diluting oil per 100 parts by weight of component (b), and (d) 0 - 100 parts by weight strength-increasing, black or pale filler substances, as well as, if necessary, pigments, stabilisers, flame retardants, antistatics, plasticisers and auxiliary products in conventional quantities, and are fused,
(ii) the ingredients are homogeneously mixed in a dispersive mixing process, ingredient (b) being dispersed by the effect of a stress, which lies above the comparative stress $\sigma_{crit}$ required for separating the rubber phase, and
(iii) the cross-linking of the rubber component is effected by means of a cross-linking emulsion or a dehydrating substance and a cross-linking catalyst.

8. Method according to claim 7, characterised in that tensile stress is produced in the flow field during the dispersive mixing process.

9. Method according to claim 8, characterised in that the tensile stress is produced by two stepped screw-like elements which rotate in the same direction.

10. Method according to one of claims 7 to 9, characterised in that the cross-linking of the rubber component is effected by means of an emulsion containing

(a) 0.005 - 0.05 parts by weight alkoxy-silane hydrolysis catalyst based on 100 parts by weight rubber,
(b) 0.5 - 4 parts by weight of substances suitable for the hydrolysis of the organosilane groups based on 100 parts by weight rubber,
(c) emulsifier in conventional concentration.

**Revendications**

1. Masse à mouler élastomère thermoplastique à base de polyoléfines thermoplastiques cristallines et de copolymères éthylène-propylène ou de terpolymères éthylène-propylène-diène, comprenant les composants suivants:

(a) 30-70 parties en poids de polyoléfine thermoplastique;
(b) 70-30 parties en poids d'un copolymère éthylène-propylène EPM ou d'un terpolymère éthylène-propylène-diène EPDM greffé de silane;
(c) 0-200 parties en poids d'huile de dilution pour 100 parties en poids du composant (b)
(d) 0-100 parties en poids de matière de remplissage noire ou claire pour accroître la résistance ainsi que
(e) le cas échéant, des pigments, des stabilisateurs, des agents ignifuges, des antistatiques, des plastifiants et des adjuvants de transformation dans les quantités habituelles,

que l'on peut obtenir en mélangeant les composants dans un processus de mélange avec dispersion, le composant (b) étant dispersé sous l'action d'une tension située au-dessus de la tension de comparaison $\sigma_{crit}$ nécessaire pour la décomposition de la phase caoutchouc.

2. Masse à mouler élastomère thermoplastique selon la revendication 1, caractérisée en ce que la teneur en diène du composant (b) se situe en dessous de 3%.

3. Masse à mouler élastomère thermoplastique selon la revendication 1 ou 2, caractérisée en ce que le composant (a) est ou comprend du polypropylène.

4. Matériau élastomère thermoplastique à base de polyoléfines thermoplastiques cristallines et de copolymères éthylène-propylène ou de terpolymères éthylène-propylène-diène, comprenant les composants suivants:

(a) 30-70 parties en poids de polyoléfines thermoplastiques;

(b) 70-30 parties en poids d'un copolymère éthylène-propylène EPM ou d'un terpolymère éthylène-propylène-diène EPDM greffé de silane;

(c) 0-200 parties en poids d'huile de dilution pour 100 parties en poids du composant (b)

(d) 0-100 parties en poids de matière de remplissage noire ou claire pour accroître la résistance ainsi que

(e) le cas échéant, des pigments, des stabilisateurs, des agents ignifuges, des antistatiques, des plastifiants et des adjuvants de transformation dans les quantités habituelles,

que l'on peut obtenir en mélangeant les composants dans un processus de mélange avec dispersion, le composant (b) étant dispersé sous l'action d'une tension située au-dessus de la tension de comparaison $\sigma_{crit}$ nécessaire pour la décomposition de la phase caoutchouc,

ainsi qu'un matériau élastomère thermoplastique que l'on peut obtenir en réticulant le composant (b) de la masse à mouler ci-dessus par une réaction d'hydrolyse et de condensation ou une action de tension permettant d'obtenir le degré de dispersion visée et accélérant la réticulation afin d'obtenir une structure en réseau tridimensionnelle.

5. Matériau élastomère thermoplastique selon la revendication 4, caractérisé en ce que la teneur en diène du composant (b) se situe en dessous de 3%.

6. Matériau élastomère thermoplastique selon la revendication 4 ou la revendication 5, caractérisé en ce que le composant (a) est ou comprend du polypropylène.

7. Procédé de préparation d'un matériau élastomère thermoplastique, caractérisé en ce que:

(i) (a) on introduit et on fait fondre 30-70 parties en poids de polyoléfine thermoplastique dans (b) 30-70 parties en poids d'un copolymère éthylène-propylène ou d'un terpolymère éthylène-propylènediène EPDM greffé de silane ainsi que (c) 0-200 parties en poids d'huile de dilution pour 100 parties en poids du composant (b) et (d) 0-100 parties en poids d'un matériau de remplissage noir ou clair élevant la résistance ainsi que le cas échéant, des pigments, des stabilisateurs, des agents ignifuges, des antistatiques, des plastifiants et des adjuvants de transformation dans les quantités habituelles;

(ii) on mélange de manière homogène les composants dans un processus de mélange avec dispersion, le constituant (b) étant dispersé sous l'action d'une tension située au-dessus de la tension comparative $\sigma_{crit}$ nécessaire pour la décomposition de la phase caoutchouc, et

(iii) on provoque la réticulation des composants caoutchouc à l'aide d'une émulsion de réticulation ou d'une substance déshydratante et d'un catalyseur de réticulation.

8. Procédé selon la revendication 7, caractérisé en ce que pendant le processus de mélange avec dispersion on produit un effort de traction dans le courant d'écoulement.

9. Procédé selon la revendication 8, caractérisé en ce que l'effort de traction est produit par deux éléments à vis étagés tournant dans le même sens.

10. Procédé selon l'une des revendications 7 à 9, caractérisé en ce qu'on produit la réticulation des composants de caoutchouc à l'aide d'une émulsion contenant:

(a) 0,005-0,05 partie en poids de catalyseur d'hydrolyse d'alcoxysilane pour 100 parties en poids de caoutchouc.

(b) 0,5-4 parties en poids de substances appropriées à l'hydrolyse des groupes organosilane pour 100 parties en poids de caoutchouc;

(c) un émulsifiant à la concentration habituelle.

## Bild 1

Ein- oder Zweiwellen-
Plast.- und Pfropfextruder

← EPIDM

← VTMOS + Peroxid

+ gegebenfalls peroxidfestes Verdünnungsöl

Temperieren Plastifizieren

Mischen und Auf-
Pfropfen des Silans

Zweiwellenextruder

Dosieren von
Vernetzeremulsion

Entgasen

Granulier- oder
Extrusions-
werkzeug

Druck-
aufbau

Intensives Scheren und
Vernetzen unter Verwendung von Knetblöcken

PP- Plastifizierung
und Vermischen

PP- Zudosierung in
Granulat- oder Pulverform

Zuschlagstoffe
Verdünnungsöl

Tandem- Anlage zur Herstellung von TPE
mit silanvernetzten Kautschukpartikeln

EP 0 510 559 B1

gegebenenfalls peroxidfestes Verdünnungsöl

Verdünnungsöl Zuschlagstoffe

EP(D)M

Silan + Peroxid

PP

**Bild 2**

| Temperieren Plastifizieren | Mischen und Aufpfropfen des Silan | Aufschmelzen des PP + Vormischen |

Vormischung

Dosieren der Vernetzeremulsion

Entgasen

Granulier - oder Extrusions-werkzeug

| Temperieren + Aufschmelzen | Scheren und Vernetzen | Druck-aufbau |

**Verfahrensschema mit zwei Extrudern zur Herstellung von TPE**

EP 0 510 559 B1